# EUROPEAN PATENT APPLICATION

(11) **EP 4 509 277 A1**
(43) Date of publication of application: **19.02.2025**
(21) Application number: 23866988.1
(22) Date of filing: 07.06.2023
(51) Int. Cl.: B25J 11/00, G01S 7/481

(54) **ROTATING BASE, DISTANCE MEASURING APPARATUS AND MOBILE ROBOT**

(30) Priority: 20.09.2022 CN 202211146069
(71) Applicant: Shenzhen Camsense Technologies Co., Ltd, Shenzhen, Guangdong 518000 (CN)
(72) Inventor: DENG, Gaowen, Shenzhen, Guangdong 518000 (CN); CHEN, Yue, Shenzhen, Guangdong 518000 (CN); ZENG, Yanshan, Shenzhen, Guangdong 518000 (CN); CHEN, Shi, Shenzhen, Guangdong 518000 (CN); DUAN, Xinfeng, Shenzhen, Guangdong 518000 (CN)
(74) Representative: Ipside
(86) International application number: PCT/CN2023/098967
(87) International publication number: WO 2024/060692

(57) **Abstract**

Embodiments of the present disclosure provide a rotary base, a ranging device, and a mobile robot, which include a mount, a drive assembly, and a processing module. The mount encloses an accommodation portion, wherein an accommodation recess is defined in the accommodation portion. The drive assembly includes a rotor being arranged in the accommodation recess and a rotation portion being connected to the rotor. The processing module is arranged on the mount and connected to the drive assembly, wherein the processing module is configured to detect a commutation signal of the drive assembly to acquire a rotation speed and a rotation angle of the rotation portion. This eliminates the need for an optical encoder and enhances the functionality of the processing module, rotary basesuch that the rotary base according to the present disclosure has a compact structure and smaller overall dimensions, with a simplified design that not only reduces costs but also lowers the risk of poor component assembly. At the same time, the step of optical communicationdetection between the optical encoder and the drive assembly is eliminated, which not only improves data transmission efficiency but also enhances the stability of data transmission, allowing the processing module to accurately determine the rotation data of the rotation portion.

## Description

### CROSS-REFERENCE TO RELATED APPLICATIONS

This application is based upon and claims partial priority to Chinese Patent Application No. 202211146069.6, filed with China National Intellectual Property Administration on September 20, 2022 and entitled "ROTARY BASE, RANGING DEVICE, AND MOBILE ROBOT", the content of which is incorporated herein by reference in its entirety.

### Technical Field

Embodiments of the present disclosure relate to the technical field of optical ranging, and in particular, relate to a rotary base, a ranging device, and a mobile robot.

### Background of the Invention

A ranging device can be used for target measurement and is widely applied in the field of robotics. The ranging device sends generated point cloud information, which includes angle, distance, and brightness, to a robot for map construction.

The ranging device is equipped with a photoelectric encoder. During operation, the photoelectric encoder detects rotation data of the ranging device (including rotation speed and angle information) and transmits the rotation data to a processing module of the ranging device by optical communication, which is then sent to the robot. However, this method results in low efficiency for the processing module in acquiring the rotation data, and the stability of data transmission is poor, leading to inaccurate rotation data obtained by the processing module. Additionally, the photoelectric encoder takes up a large amount of space, making the structure of the ranging device complex and difficult to miniaturize.

### Summary of the invention

Various embodiments of the present disclosure are intended to provide a rotary base, a ranging device, and a mobile robot to address the technical problems of low efficiency in acquiring rotational data, unstable data transmission, and difficulty in miniaturizing the ranging device.

To solve the above technical problems, embodiments of the present disclosure employ the following technical solutions.

In one aspect, the embodiments of the present disclosure provide a rotary base. The rotary base includes a mount, a drive assembly, and a processing module. The mount encloses an accommodation portion, wherein an accommodation recess is defined in the accommodation portion. The drive assembly includes a rotor being arranged in the accommodation recess and a rotation portion being connected to the rotor. The processing module is arranged on the mount and connected to the drive assembly, wherein the processing module is configured to detect a commutation signal of the drive assembly to acquire a rotation speed and a rotation angle of the rotation portion.

In some embodiments of the present disclosure, a first identification portion is arranged on the drive assembly, and in a state where the rotation portion is rotated to a predetermined position, wherein the processing module is configured to detect the first identification portion to determine an initial angle and a rotation speed of the rotation portion.

In some embodiments of the present disclosure, the processing module is configured to determine an angle value corresponding to each commutation signal according to a commutation count within one period of the drive assembly to determine the rotation angle of the rotation portion.

In some embodiments of the present disclosure, the processing module is further configured to: determine an angle variation value between two adjacent commutation signals based on a total rotation angle and the commutation count within one period; determine a start angle in response to detecting the first identification portion; and each time a commutation signal is detected, determine, based on the angle variation value, a real-time angle value corresponding to the commutation signal.

In some embodiments of the present disclosure, the processing module is further configured to: acquire a time difference between a current time and a previous commutation signal; calculate a product of the time difference and the rotation speed; and determine a sum of an angle value corresponding to the previous commutation signal and the product as a real-time angle value corresponding to a non-commutation signal.

In some embodiments of the present disclosure, the rotary base further includes a first coil and a second coil. The first coil is sleeved on the accommodation portion, and the second coil is sleeved on the rotor.

In some embodiments of the present disclosure, the second coil and the first coil are co-axially arranged, and along a direction from the second coil to the accommodation portion, the second coil and the first coil are successively arranged.

In some embodiments of the present disclosure, an opening is defined in the accommodation portion, wherein the rotor extends out of the accommodation recess from the opening, and the second coil is sleeved on the rotor outside the accommodation recess. The first coil and the second coil are successively arranged along a direction from a bottom of the accommodation recess to the opening.

In some embodiments of the present disclosure, the rotor further includes an outer cylinder, wherein the outer cylinder extends out of the accommodation recess and encloses the accommodation portion, and the second coil is sleeved on the outer cylinder.

In some embodiments of the present disclosure, the mount further includes a mount body, and the mount body has a mounting surface. Along a first direction, the accommodation portion protrudes from the mounting surface; along a second direction, a length of the accommodation portion is less than a length of the mount body; and along a third direction, a width of the accommodation portion is less than a width of the mount body. The first direction is parallel to an axis of the accommodation recess, and the first direction, the second direction, and the third direction are perpendicular to each other.

In some embodiments of the present disclosure, the rotation portion and the rotor are co-axially arranged, and the rotation portion and the rotor are integrally formed.

In some embodiments of the present disclosure, the rotation portion and the rotor are co-axially arranged, and the rotation portion is detachably connected to the rotor.

In some embodiments of the present disclosure, a positioning hole is defined in the rotation portion, and a positioning post is protrusively arranged on an end face, facing towards the rotation portion, of the rotor, wherein the positioning post is inserted into the positioning hole such that the rotation portion is detachably connected to the rotor.

In some embodiments of the present disclosure, the rotor includes a rotor shell, a shaft, and a winding. Along a shaft direction of the rotor shell, an opening is defined at one end of the rotor shell, and a connection wall is arranged at the other end of the rotor shell. The rotor shaft is co-axially connected in the rotor shell, one end of the rotor shaft is connected to the connection wall, and the other end of the rotor shaft extends out of the opening. The winding is arranged in the rotor shell and connected to the rotor shaft. The drive assembly further includes a stator, wherein the stator is positioned between an inner wall of the rotor shell and the winding.

In some embodiments of the present disclosure, a shaft sleeve is arranged in the accommodation portion, wherein a rotor shaft of the rotor is rotatably arranged in the shaft sleeve. Along a circumferential direction of the accommodation portion, a first annular groove is defined in an outer surface of the accommodation portion, wherein the first coil is sleeved in the first annular groove; and/or along a circumferential direction of the rotor, a second annular groove is defined in an outer surface of the rotor, wherein the second coil is sleeved in the second annular groove.

In some embodiments of the present disclosure, the processing module communicates with the drive assembly by a wired connection, or the processing module communicates with the drive assembly by optical communication.

In a second aspect, the embodiments of the present disclosure further provide a ranging device. The ranging device includes the rotary base according to any of the above embodiments, and a bracket, a transmit assembly, and a receive assembly. The bracket is connected to the rotation portion, wherein a transmit port and a receive port are defined in the bracket. A transmit assembly is arranged at the transmit port and configured to transmit a signal. A receive assembly is arranged at the receive port and configured to receive a signal.

In some embodiments of the present disclosure, the ranging device further includes a cover assembly, wherein the cover assembly is connected to the mount, and the cover assembly is configured to cover the accommodation portion, the transmit assembly, and the receive assembly. A first connection portion and a second connection portion are arranged on an end face, facing towards the mount, of the cover assembly, and a first positioning portion and a second positioning portion are arranged an end face, facing towards the cover assembly, of the mount. An outer contour of the first connection portion is matched with the first positioning portion, and the first connection portion is configured to be aligned with and connected to the first positioning portion. An outer contour of the second connection portion is matched with the second positioning portion, and the second connection portion is configured to be aligned with and connected to the second positioning portion.

In a third aspect, the embodiments of the present disclosure further provide a mobile robot. The mobile robot includes the ranging device according to any of the above embodiments.

The embodiments of the present application achieve the following beneficial effects:
In the embodiments of the present disclosure, the rotation speed and the rotation angle of the rotation portion are determined directly by detecting the commutation signals of the drive assembly using the processing module, eliminating the need for an optical encoder and enhancing the functionality of the processing module. This allows the rotary base according to the present disclosure to have a compact structure and smaller overall dimensions, with a simplified design that not only reduces costs but also lowers the risk of poor component assembly. At the same time, the step of optical communication detection between the optical encoder and the drive assembly is eliminated, which not only improves data transmission efficiency but also enhances the stability of data transmission, allowing the processing module to accurately determine the rotation data of the rotation portion.

The above description only summarizes the technical solutions of the present disclosure. Specific embodiments of the present disclosure are described hereinafter to better and more clearly understand the technical solutions of the present disclosure, to practice the technical solutions based on the disclosure of the specification, and to make the above and other objectives, features and advantages of the present disclosure more apparent and understandable.

### Brief Description of the Drawings

One or more embodiments are illustrated by way of example, and not by limitation, in the figures of the accompanying drawings, wherein components having the same reference numeral designations represent like components throughout. The drawings are not to scale, unless otherwise disclosed.
FIG. 1 is a schematic structural diagram of a rotary base according to some embodiments of the present disclosure;
FIG. 2 is an exploded view of a rotary base according to some embodiments of the present disclosure;
FIG. 3 is a schematic structural diagram of a mount according to some embodiments of the present disclosure;
FIG. 4 is a schematic structural diagram of a rotor according to some embodiments of the present disclosure;
FIG. 5 is a schematic mounting diagram of a rotation portion according to some embodiments of the present disclosure;
FIG. 6 is a schematic mounting diagram of a processing module according to some embodiments of the present disclosure;
FIG. 7 is a schematic detection diagram of a commutation signal according to some embodiments of the present disclosure;
FIG. 8 is a schematic structural diagram of a rotor according to some embodiments of the present disclosure;
FIG. 9 is a schematic partial structural diagram of a ranging device according to some embodiments of the present disclosure;
FIG. 10 is a schematic mounting diagram of a bracket, a rotation portion, and a rotor according to some embodiments of the present disclosure;
FIG. 11 is a schematic structural diagram of a ranging device according to some embodiments of the present disclosure;
FIG. 12 is an exploded view of a ranging device according to some embodiments of the present disclosure;
FIG. 13 is an exploded view of a ranging device according to some embodiments of the present disclosure;
FIG. 14 is a schematic structural diagram of a cover assembly according to some embodiments of the present disclosure;
FIG. 15 is a cross-sectional view of a ranging device according to some embodiments of the present disclosure;
FIG. 16 is a top view of a cover assembly according to some embodiments of the present disclosure;
FIG. 17 is a schematic structural diagram of a rotary base according to some embodiments of the present disclosure;
FIG. 18 is an exploded view of a rotary base according to some embodiments of the present disclosure;
FIG. 19 is a schematic structural diagram of a rotary base according to some embodiments of the present disclosure; and
FIG. 20 is an A-A sectional view of FIG. 19.

### Description of reference numerals:

1000-ranging device;
100-rotary base;
10-mount; 11-mount body; 111-mounting surface; 112-mounting slot; 12-accommodation portion; 121-accommodation recess; 122-first annular groove; 123-shaft sleeve; 13-first positioning portion; 14-second positioning portion;
20-first coil;
30-drive assembly; 31-rotor; 311-rotor shell; 3111-connection wall; 3112-second annular groove; 312-rotor shaft; 313-winding slot; 314-positioning post; 315-outer cylinder; 32-rotation portion; 321-positioning hole; 33-stator; 34-first identification portion;
40-second coil;
50-processing module;
60-bracket; 61-transmit port; 62-receive port; 63-positioning slot;
70-transmit assembly;
80-receive assembly;
90-cover assembly; 91-first cover; 92-second cover; 921-first connection portion; 922-second connection portion; 923-clamping space.

### Detailed Description of the Embodiments

The embodiments containing the technical solutions of the present disclosure are described in detail with reference to the accompanying drawings. The embodiments hereinafter are only used to clearly describe the technical solutions of the present disclosure. Therefore, these embodiments are only used as examples, but are not intended to limit the protection scope of the present disclosure.

Unless defined otherwise, all technical and scientific terms used herein have the same meaning as commonly understood by one of ordinary skill in the art to which the present disclosure pertains. The terms used herein in the specification of present disclosure are only intended to illustrate the specific embodiments of the present disclosure, instead of limiting the present disclosure. The terms "comprise," "include," and any variations thereof in the specification, claims, and the description of the drawings of the present disclosure are intended to cover a non-exclusive inclusion.

In the description of the embodiments of the present disclosure, the term "and/or" is merely an association relationship for describing associated objects, which represents that there may exist three types of relationships. For example, the phrase "A and/or B" means (A), (B), or (A and B). In addition, the forward-slash symbol "/" generally represents an "or" relationship between associated objects before and after the symbol.

In the description of the present disclosure, the terms "first," "second," and the like are only used for distinguishing different objects, but shall not be understood as indication or implication of relative importance or implicit indication of the number of the specific technical features, the specific sequence or priorities. In the description of the embodiments of the present disclosure, the term "multiple" or "a plurality of" signifies at least two, unless otherwise specified.

The terms "example" and "embodiment" in this specification signify that the specific characteristic, structures or features described with reference to the embodiments may be covered in at least one embodiment of the present disclosure. This term, when appearing in various parts of the specification, neither indicates the same embodiment, nor indicates an independent or optional embodiment that is exclusive of the other embodiments.

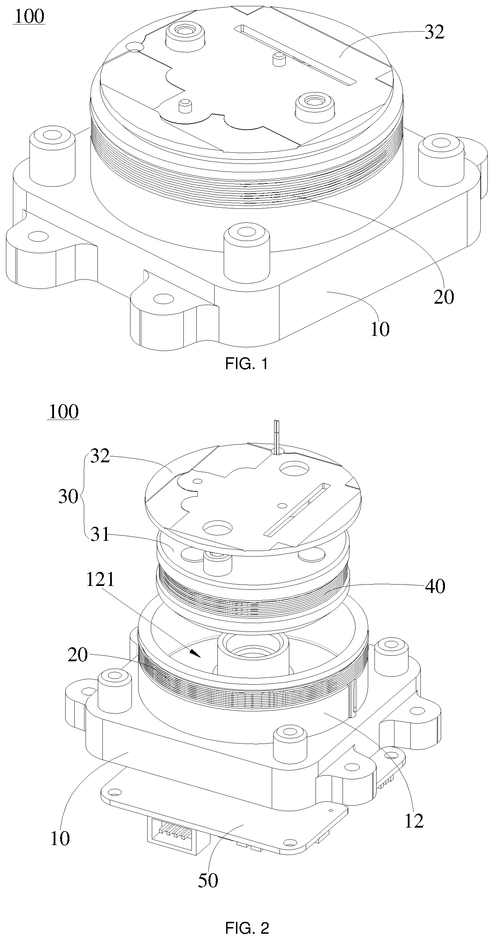

In a first aspect, some embodiments of the present disclosure provide a rotary base 100. Referring to FIG. 1 and FIG. 2, the rotary base 100 includes a mount 10, a first coil 20, a drive assembly 30, a second coil 40, and a processing module 50.

With respect to the mount 10 above, referring to FIG. 1 to FIG. 3, the mount 10 serves as a support structure. The first coil 20, the drive assembly 30, the second coil 40, and the processing module 50 may all be arranged on the mount 10. The mount 10 includes a mount body 11 and an accommodation portion 12. A mounting surface 111 is arranged on the mount body 11, and the drive assembly 30 may be arranged on the mounting surface 111. Specifically, the accommodation portion 12 encloses the mounting surface 111 of the mount 10. An accommodation recess 121 is defined in the accommodation portion 12. The accommodation recess 121 extends to a specific depth of the mount body 11, and an opening (not illustrated in the drawings) of the accommodation recess 121 is defined as facing away from the mount body 11. Optionally, the mount body 11 and the accommodation portion 12 are integrally formed to improve an overall strength of the mount 10.

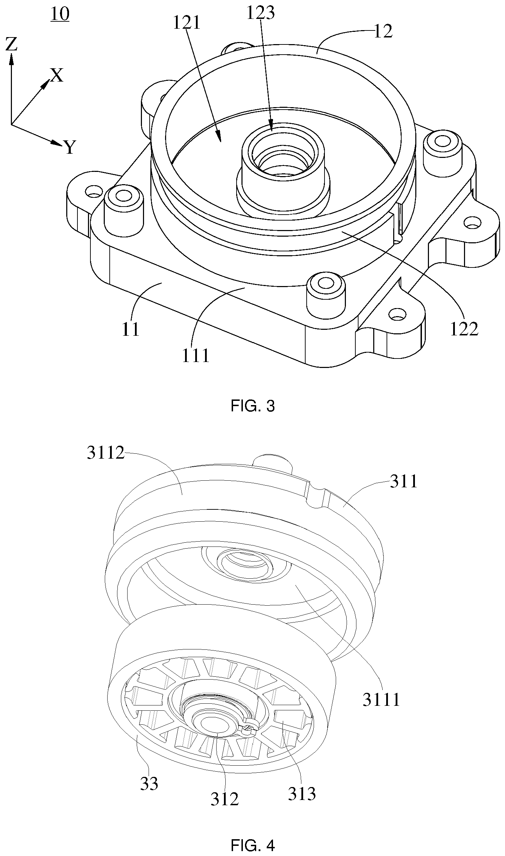

In some other embodiments, referring to FIG. 3, the mount 10 may be designed to a square structure, the accommodation portion 12 may be designed to a columnar structure, and the accommodation recess 121 may also be designed to a columnar recess. Along a first direction Z, the accommodation portion 12 protrudes from the mounting surface 111; along a second direction X, a length of the accommodation portion 12 is less than a length of the mount body 11; and along a third direction Y, a width of the accommodation portion 12 is less than a width of the mount body 11; wherein the first direction Z is parallel to an axis of the accommodation recess 121, and the first direction Z, the second direction X, and the third direction Y are perpendicular to each other. In these embodiments, outer dimensions of the accommodation portion 12 are set to be less than outer dimensions of the mount body 11 to reduce spaced occupied by the accommodation portion 12, such that an overall volume of the mount 10 is reduced.

With respect to the first coil 20 above, referring to FIG. 1 and FIG. 3, the first coil 20 is sleeved on an outer surface of the accommodation portion 12. Specifically, along a circumferential direction of the accommodation portion 12, a first annular groove 122 is defined in the outer surface of the accommodation portion 12. The first coil 20 is sleeved in the first annular groove 122 and received therein, such that the first coil 20 does not occupy excessive space to ensure that the rotary base 100 has a compact structure.

With respect to the drive assembly 30 above, referring to FIG. 1 and FIG. 2, the drive assembly 30 may employ a direct current brushless motor. For example, the drive assembly 30 includes a rotor 31 and a rotation portion 32. The rotor 31 is arranged in the accommodation recess 121, and the rotor 31 and the accommodation recess 121 are co-axially arranged to ensure that the rotor 31 is capable of rotating in the accommodation recess 121.

In some embodiments, referring to FIG. 2 to FIG. 4, the rotor 31 includes a rotor shell 311, a rotor shaft 312, and a winding (not illustrated in the drawings). The rotor shell 311 is a cylindrical structure with an open end. Specifically, along an axial direction of the rotor shell 311, an opening (not illustrated in the drawings) is defined in one end of the rotor shell 311, and a connection wall 3111 is arranged on the other end. The rotor shaft 312 is co-axially connected in the rotor shell 311. Specifically, one end of the rotor shaft 312 is connected to the connection wall 3111, and the other end of the rotor shaft 312 extends out of the opening. Optionally, a shaft sleeve 123 is arranged in the accommodation portion 12. The shaft sleeve 123 may be co-axially arranged with the accommodation portion 12, and the rotor shaft 312 may be arranged in the shaft sleeve 123 to protect the rotor shaft 312. The winding is arranged in the rotor shell 311 and connected to the rotor shaft 312. The winding includes a winding slot 313 and a wire harness (not illustrated in the drawings). The winding slot 313 is connected to the rotor shaft 312, and the wire harness is wound on the winding slot 313. The drive assembly 30 further includes a stator 33. The stator 33 is positioned between an inner wall of the rotor shell 311 and the winding. In the case that the drive assembly 30 operates, the stator 33 is fixed, and the rotor 31 rotates.

The rotation portion 32 is connected to an end, facing away from the mount 10, of the rotor 31, and rotation of the rotor 31 causes the rotation portion 32 to rotate. In some embodiments, the rotation portion 32 is a circular plate structure. The circular plate structure is coincident with an axis of rotation thereof, that is, the rotation portion 32 is capable of rotating about its own axis.

Optionally, in some embodiments, the rotation portion 32 and the rotor 31 are co-axially arranged, the rotation portion 32 and the rotor 31 are integrally formed. Such integral configuration enhances stability of connection between the rotation portion 32 and the rotor 31, such that the rotor 31 stably drives the rotation portion 32 to rotate.

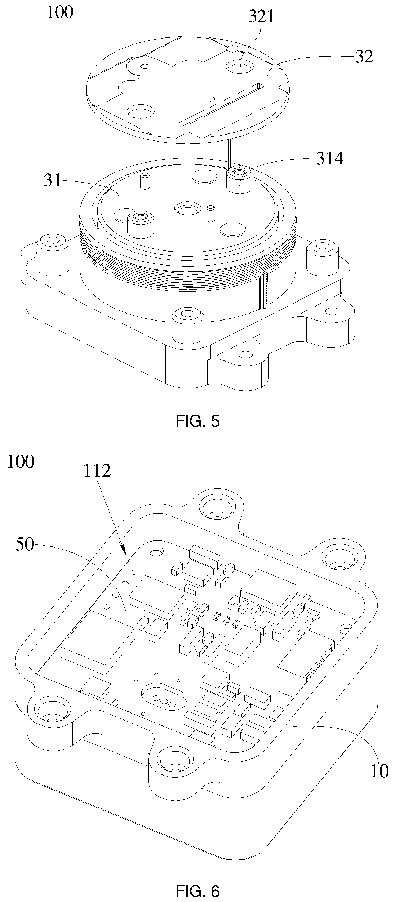

Optionally, in some embodiments, referring to FIG. 5, the rotation portion 32 and the rotor 31 are co-axially arranged, and the rotation portion 32 is detachably connected to the rotor 31. Specifically, a positioning hole 321 is defined in the rotation portion 32, and a positioning post 314 is protrusively arranged on an end face, facing towards the rotation portion 32, of the rotor 31. The positioning post 314 is inserted into the positioning hole 321, such that the rotation portion 32 is detachably connected to the rotor 31. The detachable connection facilitates future removal for maintenance or replacement of the rotation portion 32.

With respect to the second coil 40 above, referring to FIG. 2 and FIG. 4, the second coil 40 is sleeved on an outer surface of the rotor 31. Specifically, along a circumferential direction of the rotor shell 311, a second annular groove 3112 is defined in the outer surface of the rotor shell 311. The second coil 40 is sleeved in the second annular groove 3112 and received therein, such that the second coil 40 does not occupy excessive space to ensure that the rotary base 100 has a compact structure. The second coil 40 and the first coil 20 are co-axially arranged. Along a direction of the second coil 40 and the accommodation portion 12, the second coil 40 and the first coil 20 are successively arranged, that is, the second coil 40 and the first coil 20 are arranged in an inner-outer configuration.

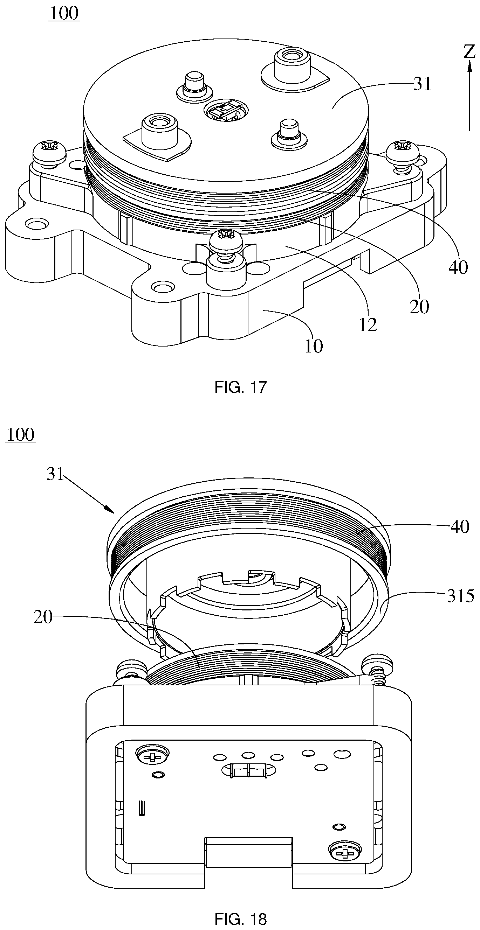

In addition, the second coil 40 and the first coil 20 may also be arranged in an upper-lower configuration. For example, referring to FIG. 17, an opening (not illustrated in the drawings) is defined in the accommodation portion 12. The rotor 31 extends out of the accommodation recess 121 from the opening, and the second coil 40 is sleeved on the rotor 31 outside the accommodation recess 121. Along a direction from a bottom of the accommodation recess 121 to the opening (that is, the first direction), the first coil 20 and the first coil 40 are successively arranged. In these embodiments, the dimensions of a portion, within the accommodation recess 121, of the rotor 31 may be reduced, for example, the radius of this portion is reduced, such that the dimension of the accommodation portion 12 is reduced.

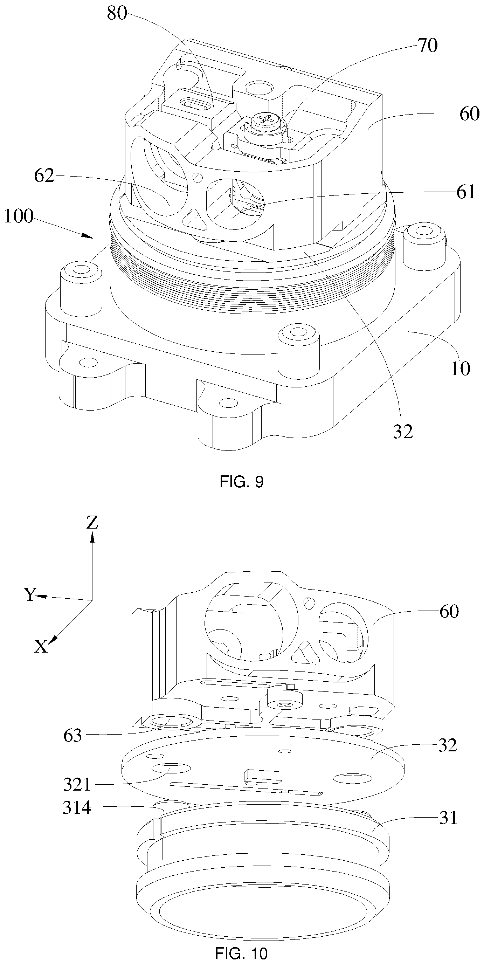

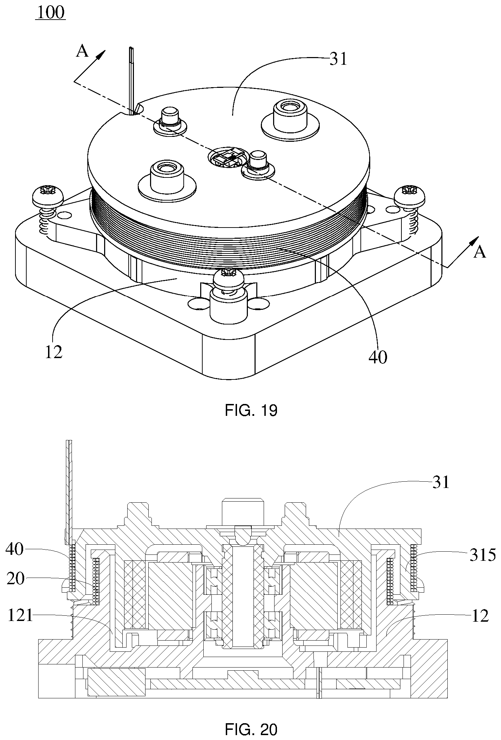

In some other embodiments, the second coil 40 and the first coil 20 may also be arranged in an outer-inner configuration. That is, the second coil 40 is arranged on the outside, and the first coil 20 is arranged on the inside. Specifically, referring to FIG. 18 to FIG. 20, the rotor 31 further includes an outer cylinder 315. The outer cylinder 315 extends out of the accommodation recess 121 and encloses the accommodation portion 12. A gap is defined between the outer cylinder 315 and the accommodation portion 12 to facilitate rotation of the outer cylinder 315. The second coil 40 is sleeved on the outer cylinder 315. In this way, the outer-inner configuration of the second coil 40 and the first coil 20 is formed. In these embodiments, a clearance zone (not illustrated in the drawings) is defined in the accommodation portion 12. The outer cylinder 315 is arranged in the clearance zone to ensure that the dimensions of the rotor 31 are as small as possible. In the meantime, under double protection by the outer cylinder 315 and the accommodation portion 12, external moisture may be further prevented from entering the accommodation recess 121. In addition, this structure may increase the area of an upper surface of the rotor 31, such that the ranging components (including a bracket 60, a transmit assembly 70, and a receive assembly 80, referring to FIG. 9) are driven to rotate.

In the embodiments of the present disclosure, the rotary base may be wirelessly powered; the first coil 20 is arranged outside the accommodation recess 121 and is a stator coil, for example, a wireless power supply coil; and the second coil 40 is arranged inside the accommodation recess 121 and arranged on the rotor 31, and is a rotor coil, for example, a wireless power receiving coil. The first coil 20 and the second coil 40 form a wireless power supply assembly. According to the wireless power supply technology, the wireless power supply assembly is capable of supplying power to the drive assembly 30, that is, driving the rotor 31 to rotate such that the rotation portion 32 is driven to rotate.

With respect to the processing module 50 above, referring to FIG. 2 and FIG. 6, a mounting slot 112 is defined in an end face, facing away from the accommodation portion 12, of the mount 10, and the processing module 50 may be arranged in the mounting slot 112 and received therein. The processing module 50 may be communicably connected to the drive assembly 30 in a wired manner, and the processing module 50 is configured to directly detect a commutation signal of the drive assembly 30 to acquire a rotation speed and a rotation angle of the rotation portion 32. Optionally, the processing module 50 and the drive assembly 30 may communicate with each other by optical communication to reduce the space occupied by cables. It should be noted that in these embodiments, turn-on or turn-off of the drive assembly 30 is controlled by the processing module 50 by optical communication. The optical communication herein causes no adverse impacts to detection of the rotation speed and the rotation angle.

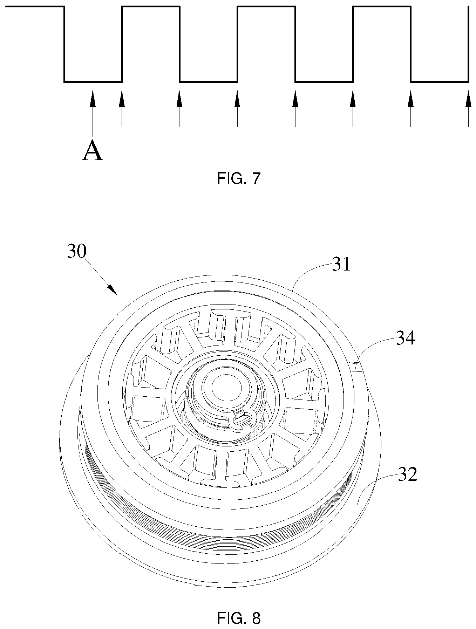

The drive assembly 30 may employ a direct current brushless motor. Since a commutation signal of the direct current brushless motor is uniform, it is hard to distinguish a zero-degree angle of the rotation portion 32. In some embodiments, referring to FIG. 2 and FIG. 8, a first identification portion 34 is arranged on the drive assembly 30. In the case that the rotation portion 32 rotates to a predetermined position, the processing module 50 is configured to detect the first identification portion 34 to determine a start angle and the rotation speed of the rotation portion 32. The first identification portion 34 may be arranged on an end face, facing away from the rotation portion 32, of the rotor 31, and the first identification portion 34 is arranged to be close to the processing module. The first identification portion 34 is different from other parts of the rotor 31. For example, the first identification portion 34 is formed by coloring on the rotor 31 or defining an groove in the rotor 31. The first identification portion 34 may serve as a zero-degree angle of rotation of the drive assembly 30. In the case that the processing module 50 detects the first identification portion 34, using the first identification portion 34 as the zero-degree angle, time for rotation in one period (that is, when the first identification portion 34 is detected for a second time) is recorded, and the rotation speed of the rotation portion 32 may be calculated based on a total rotation angle and the time within one period.

With respect to the detection of the first identification portion34, the first identification portion 34 may be carried out by a photoelectric switch (not illustrated in the drawings). The photoelectric switch is connected to the processing module 50. For example, the photoelectric switch communicates with the processing module 50 in a wired manner to ensure stable data transmission. In the case that the first identification portion 34 moves to a position corresponding to the photoelectric switch, the photoelectric switch detects the first identification portion 34 and transmits a detected signal to the processing module 50, and the processing module 50 identifies the position as the zero-degree angle. In some other embodiments, a magnetic mark (not illustrated in the drawings) may also be arranged at a predetermined position on the rotor 31. For example, a magnet is arranged to serve as the first identification portion 34, and a Hall sensor (not illustrated in the drawings) is mounted at a corresponding position on the processing module 50 to detect the first identification portion 34. The detection may be implemented in a plurality of ways, which are not exhaustively listed herein.

With respect to the determination of the rotation angle of the rotation portion 32, the processing module 50 may determine an angle value corresponding to each commutation signal according to a commutation count within one period of the drive assembly 30 to determine the rotation angle of the rotation portion 32. In some embodiments, a microcontroller unit (MCU) (not illustrated in the drawings) is arranged on the processing module 50. The MCU is configured to detect the commutation signal of the drive assembly 30, and calculate the rotation speed and angle of the rotation portion 32 based on the commutation signal. Specifically, the processing module 50 determines an angle variation value between two adjacent commutation signals based on a total rotation angle and the commutation count within one period; determines a start angle in response to detecting the first identification portion 34; and each time a commutation signal is detected, determines, based on the angle variation value, a real-time angle value corresponding to the commutation signal. For example, in the case that the drive assembly 30 employs a direct current brushless motor, 14 commutation signals are generated upon one-turn rotation (one period), the MCU records a total time of the 14 signals, and hence a period and frequency (that is, rotation speed) of rotation of the drive assembly 30 may be known. Each time 14 signals are generated, the drive assembly 30 has rotated by 360/14=25.7 degrees. In the case that the zero point (zero-degree angle, that is, the first identification portion 34 is detected), the angle is cleared, and hence the real-time angle values corresponding to the commutation signals of the drive assembly 30 are calculated. By this approach, the angle values corresponding to the commutation signals are simply acquired.

With respect to the detection of the angle value at other moments, the processing module 50 may acquire a time difference between a current time and a previous commutation signal; calculate a product of the time difference and the rotation speed; and determine a sum of an angle value corresponding to the previous commutation signal and the product as a real-time angle value corresponding to a non-commutation signal. For example, referring to FIG. 7, A is marked as a zero-degree angle position, and each raising edge and each falling edge may be both set to a fixed angle. In the case that no commutation signal is triggered, an instantaneous angle is a sum of an angle at a previous frame and a product of a time difference at the previous frame and the rotation speed, that is, angleN (instantaneous angle)=angleO (angle at the previous angle)+speeds (rotation speed)*TIME (time difference). By this approach, the angles at various moments of the rotation portion 32 may be conveniently and accurately acquired.

In the embodiments of the present disclosure, the rotation speed and the rotation angle of the rotation portion 32 are determined directly by detecting the commutation signals of the drive assembly 30 using the processing module 50, eliminating the need for an optical encoder and enhancing the functionality of the processing module 50. This allows the rotary base 100 according to the present disclosure to have a compact structure and smaller overall dimensions, with a simplified design that not only reduces costs but also lowers the risk of poor component assembly. At the same time, the step of optical communication detection between the optical encoder and the drive assembly 30 is eliminated, which not only improves data transmission efficiency but also enhances the stability of data transmission, allowing the processing module 50 to accurately determine the rotation data of the rotation portion 32.

In a second aspect, some embodiments of the present disclosure further provide a ranging device 1000. The ranging device 1000 includes the rotary base 100 according to any of the above embodiments. Referring to FIG. 9, the ranging device 1000 further includes a bracket 60, and a transmit assembly 70 and a receive assembly 80 arranged on the bracket 60.

With respect to the bracket 60 above, referring to FIG. 9, the bracket 60 is a support structure of the transmit assembly 70 and the receive assembly 80. A transmit port 61 and a receive port 62 are defined in the bracket 60. The transmit port 61 is configured to receive the transmit assembly 70, and the receive port 62 is configured to receive the receive assembly 80. The bracket 60 is connected to an end face, facing away from the mount 10, of the rotation portion 32, and the rotation portion 32 rotates to drive the bracket 60 to rotate.

With respect to the transmit assembly 70 and the receive assembly 80 above, referring to FIG. 9, the transmit assembly 70 is arranged at the transmit port 61 in the bracket 60, and the receive assembly 80 is arranged at the receive port 62 in the bracket 60. The transmit assembly 70 is configured to transmit signals, and the receive assembly 80 is configured to receive signals reflected via an object under detection. The transmit assembly 70 and the receive assembly 80 form a radar assembly of the ranging device 1000 to perform ranging. The bracket 60 rotates under drive of the rotation portion 32, such that the transmit assembly 70 and the receive assembly 80 rotate 360 degrees periodically to perform omnidirectional ranging.

In some embodiments, referring to FIG. 10, a positioning slot 63 is defined in an end, facing towards the rotation portion 32, of the bracket 60, a positioning post 314 is arranged on an end face, facing towards the bracket 60, of the rotor 31, and a run-through positioning hole 321 is defined in the rotation portion 32. The positions of the positioning slot 63, the positioning post 314, and the positioning hole 321 correspond to each other in the first direction Z. The positioning post 314 on the rotor 31 may extend out of the positioning hole 321 in the rotation portion 32 and is inserted into the positioning slot 63 to facilitate positioning and connection of the bracket 60, the rotation portion 32, and the rotor 31. Optionally, a plurality of positioning slots 63 may be arranged to improve accuracy of the positioning and connection, and likewise, the number of positioning posts 314 and the number of positioning holes 321 may be both equal to the number of positioning slots 63 for corresponding insertion. In some other embodiments, the bracket 60, the rotation portion 32, and the rotor 31 may be integrally formed and arranged to improve an overall strength.

In some embodiments, the ranging device 1000 further includes a cover assembly 90. Referring to FIG. 9, FIG. 11, and FIG. 12, the cover assembly 90 is connected to the mount 10 and covers the accommodation portion 12, the bracket 60, the transmit assembly 70, and the receive assembly 80. In these embodiments, by the cover assembly 90, rainwater or dust or impurities may be prevented from corroding the drive assembly 30, the bracket 60, the transmit assembly 70, and the receive assembly 80 inside the accommodation portion 12.

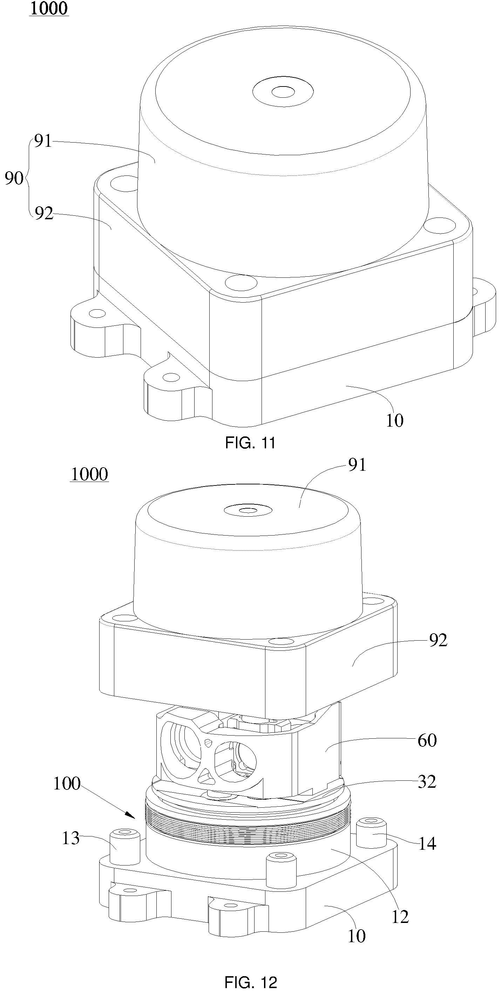

Additionally, referring to FIG. 11, the cover assembly 90 includes a first cover 91 and a second cover 92.

With respect to the first cover 91 above, referring to FIG. 9, FIG. 11, and FIG. 12, the first cover 91 is configured to cover the bracket 60, the transmit assembly 70, and the receive assembly 80. Optionally, the first cover 90 may be designed to a cylindrical structure, and an axis of the first cover 91 is coincident with an axis of rotation of the rotation portion 32, such that a distance from the transmit assembly 70 to an inner wall of the first cover 91 is equal to a distance from the receive assembly 80 to the inner wall of the first cover 91 in the case that the rotation portion 32 rotates, thereby facilitating transmission of signals between the transmit assembly 70 and the receive assembly 80.

With respect to the second cover 92 above, one end of the second cover 92 is connected to the first cover 91, and the other end of the second cover 92 is connected to the mount 10. The second cover 92 surrounds, and encloses and covers a circumference of the accommodation portion 12 to protect the drive assembly 30 in the accommodation portion 12. Optionally, the second cover 92 and the first cover 91 are integrally formed, to improve stability of connection between the first cover 91 and the second cover 92 and enhance overall strength. An inner chamber of the first cover 91 is in communication with an inner chamber of the second cover 92, such that during mounting, the transmit assembly 70 and the receive assembly 80 pass through the second cover 92 and are positioned in the first cover 91.

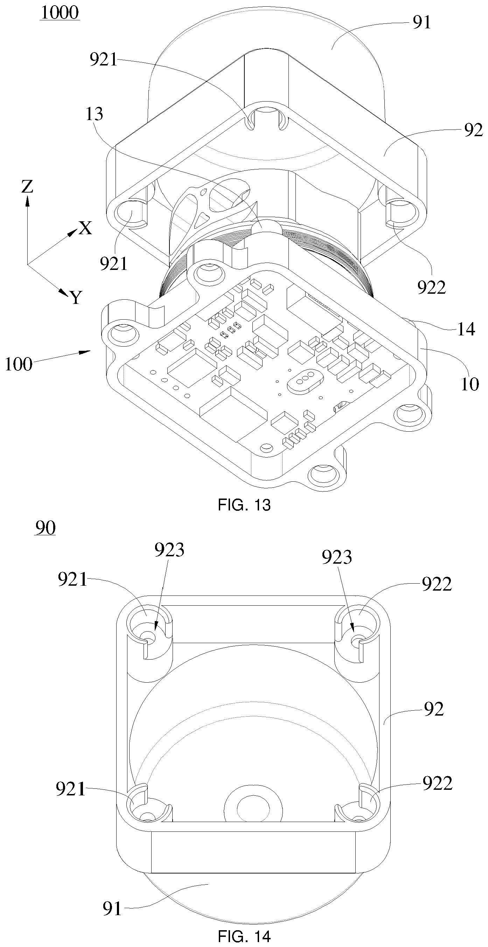

In some embodiments, referring to FIG. 13 and FIG. 14, a first connection end 921 and a second connection end 922 are arranged on an end face, facing away from the first cover 91, of the second cover 92; and a first positioning portion 13 and a second positioning portion 14 are arranged on an end face, facing towards the second body 92, of the mount 10. An outer contour of the first connection portion 921 matches with the first positioning portion 13, and the first connection portion 921 is configured to be positioned and secured to the first positioning portion 13. An outer contour of the second connection portion 922 matches with the second positioning portion 14, and the second connection portion 922 is configured to be positioned and secured to the second positioning portion 14.

For example, the first positioning portion 13 and the second positioning portion 14 are both insertion posts protrusively arranged on the mount 10, and the first connection portion 921 and the second connection portion 922 are both snap fasteners arranged on the second cover 92. The snap fasteners each encloses a retractable clamping space 923. In a natural state, a radius of the clamping space 923 may be defined to be less than a radius of the insertion post. In the case that the insertion post is snap-fitted into the clamping space 923 of the snap fastener, the insertion post pushes against the inner wall of the snap fastener to extend the clamping space 923, such that the insertion post is inserted and clamped tightly in the clamping space 923 of the fastener. Along a direction from the mount 10 to the second cover 92 (the first direction Z), the clamping space 923 of the first connection portion 921 and the clamping space 923 of the second connection portion 922 have different depths. For example, a height at which the first positioning portion 13 protrudes from the mount 10 is greater than a height at which the second positioning portion 14 protrudes from the mount 10. In order that the positioning portions and the connection portions are matched and connected, a depth of the first connection portion 921 is greater than a depth of the second connection portion 922. The depth of the first connection portion 921 is equal to the height at which the first positioning portion 13 protrudes from the mount 10, and the depth of the second connection portion 922 is equal to the height at which the second positioning portion 14 protrudes from the mount 10, such that the first connection portion 921 is positioned and secured to the first positioning portion 13, and the second connection portion 922 is positioned and secured to the second positioning portion 14. In these embodiments, by designing the first connection portion 921 and the second connection portion 922 as snap fasteners, the snap fasteners each have a retractable clamping space 923 to adapt to insertion posts having different diameters.

In some other embodiments, the first connection portion 921 and the second connection portion 922 are both insertion holes defined in the second cover 92, and the first positioning hole 13 and the second positioning hole 14 are both insertion posts defined in the mount 10. For ease of positioning and securing the first connection portion 921 to the first positioning portion 13, the second connection portion 922 is positioned and secured to the second positioning portion 14. Along the first direction Z, the first connection portion 921 and the second connection portion 922 have different depths, that is, heights at which the first positioning portion 13 and the second positioning portion 14 protrudes from the mount 10 are different. Alternatively, along the second direction X, the first connection portion 921 and the second connection portion 922 have different lengths, that is, the first positioning portion 13 and the second positioning portion 14 have different lengths. Alternatively, along the third direction Y, the first connection portion 921 and the second connection portion 922 have different widths, that is, the second positioning portion 14 and the second positioning portion 14 have different widths. It should be noted that in these embodiments, the first direction Z is a depth direction of the insertion hole, and the first direction Z, the second direction X, and the third direction Y are perpendicular to each other.

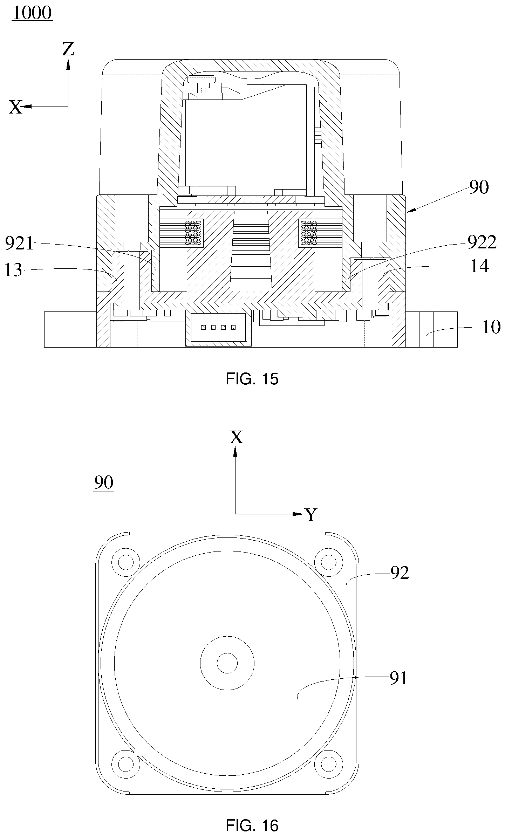

Optionally, referring to FIG. 15 and FIG. 16, along the second direction X, a length of the first cover 91 is less than or equal to a length of the second cover 92; along the third direction Y, a width of the first cover 91 is less than or equal to a width of the second cover 92; and the second direction X, the third direction Y, and an axial direction of the first cover 91 are perpendicular to each other. In these embodiments, overall dimensions of the first cover 91 are defined to be less than overall dimensions of the second cover 92 to reduce the space occupied by the cover assembly 90, such that miniaturized design of the ranging device 1000 is achieved.

In the embodiments of the present disclosure, the first positioning portion 13 and the second positioning portion 14 are arranged on the mount 10, and the first connection portion 921 and the second connection portion 922 are arranged on the second cover 92. The first connection portion 921 is configured to be positioned and inserted to the first positioning portion 13, and the second connection portion 922 is configured to be positioned and inserted to the second positioning portion 14, such that the second cover 92 is accurately positioned and secured to the mount 10. In this way, mounting precision between the second cover 92 and the mount 10 is improved. In addition, in the embodiments of the present disclosure, the rotation speed and the rotation angle of the rotation portion 32 are acquired by detecting the commutation signals of the drive assembly 30 using the processing module 50 such that the need for an optical encoder is eliminated, and the first coil 20 is directly sleeved in the first annular groove 122 of the accommodation portion 12 such that the rotary base 100 has smaller outer dimensions. Therefore, a cover assembly 90 having smaller dimensions may be correspondingly arranged, such that the ranging device 1000 has a compact structure and smaller outer dimensions, and hence the space occupied by the ranging device 1000 is reduced.

In a third aspect, some embodiments of the present disclosure further provide a mobile robot. The mobile robot includes the ranging device 1000 according to the second aspect.

Finally, it should be noted that the above embodiments are merely used to illustrate the technical solutions of the present disclosure rather than limiting the technical solutions of the present disclosure. Under the concept of the present disclosure, the technical features of the above embodiments or other different embodiments may be combined, the steps therein may be performed in any sequence, and various variations may be derived in different aspects of the present disclosure, which are not detailed herein for brevity of description. Although the present disclosure is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present disclosure.

## Claims

1. A rotary base, **characterized in that**, the rotary base comprises:
a mount, enclosing an accommodation portion, wherein an accommodation recess is defined in the accommodation portion;
a drive assembly, comprising a rotor being arranged in the accommodation recess and a rotation portion being connected to the rotor;
a processing module, being arranged on the mount and connected to the drive assembly, wherein the processing module is configured to detect a commutation signal of the drive assembly to acquire a rotation speed and a rotation angle of the rotation portion.

2. The rotary base according to Claim 1, **characterized in that**, the rotary base further comprises a wireless power supply assembly; wherein the wireless power supply assembly comprises a first coil and a second coil, the first coil being sleeved on the accommodation portion, and the second coil being sleeved on the rotor.

3. The rotary base according to claim 1, **characterized in that**, a first identification portion is arranged on the drive assembly, and in a state where the rotation portion is rotated to a predetermined position, the processing module is configured to detect the first identification portion;
wherein the processing module is configured to detect the commutation signal of the drive assembly, and determine the rotation speed and the rotation angle of the rotation portion according to a rotation period and a commutation count upon detecting the first identification portion.

4. The rotary base according to claim 3, **characterized in that**, the processing module is configured to determine an angle value corresponding to each commutation signal according to a commutation count within one period of the drive assembly to determine the rotation angle of the rotation portion .

5. The rotary base according to claim 4, **characterized in that**, the processing module is further configured to:
determine an angle variation value between two adjacent commutation signals based on a total rotation angle and the commutation count within one period;
determine a start angle in response to detecting the first identification portion;
and each time a commutation signal is detected, determine, based on the angle variation value, a real-time angle value corresponding to the commutation signal.

6. The rotary base according to claim 5, **characterized in that**, the processing module is further configured to:
acquire a time difference between a current time and a previous commutation signal;
calculate a product of the time difference and the rotation speed;
and determine a sum of an angle value corresponding to the previous commutation signal and the product as a real-time angle value corresponding to a non-commutation signal.

7. The rotary base according to claim 2, **characterized in that**, the second coil and the first coil are co-axially arranged, and along a direction from the second coil to the accommodation portion, the second coil and the first coil are successively arranged.

8. The rotary base according to claim 2, **characterized in that**, an opening is defined in the accommodation portion, wherein the rotor extends out of the accommodation recess from the opening, and the second coil is sleeved on the rotor outside the accommodation recess;
and the first coil and the second coil are successively arranged along a direction from a bottom of the accommodation recess to the opening.

9. The rotary base according to claim 2, **characterized in that**, the rotor further comprises an outer cylinder, wherein the outer cylinder extends out of the accommodation recess and encloses the accommodation portion, and the second coil is sleeved on the outer cylinder.

10. The rotary base according to claim 1, **characterized in that**, the mount further comprises a mount body; wherein the accommodation portion is arranged on the mount body;
wherein along a first direction, the accommodation portion protrudes from a surface of the mount body;
wherein along a second direction, a length of the accommodation portion is less than a length of the mount body;
wherein along a third direction, a width of the accommodation portion is less than a width of the mount body;
wherein the first direction is parallel to an axis of the accommodation recess, and the first direction, the second direction, and the third direction are perpendicular to each other.

11. The rotary base according to claim 7, **characterized in that**, a shaft sleeve is arranged in the accommodation portion, wherein a rotor shaft of the rotor is rotatably arranged in the shaft sleeve;
wherein along a circumferential direction of the accommodation portion, a first annular groove is defined in an outer surface of the accommodation portion,
wherein the first coil is sleeved in the first annular groove;
and/or wherein along a circumferential direction of the rotor, a second annular groove is defined in an outer surface of the rotor, wherein the second coil is sleeved in the second annular groove.

12. The rotary base (100) according to claim 1, wherein the processing module (50) communicates with the drive assembly (30) by a wired connection, or the processing module (50) communicates with the drive assembly (30) by optical communication.

13. The rotary base (100) according to claim 1, wherein the rotation portion (32) and the rotor (31) are co-axially arranged, and the rotation portion (32) is detachably connected to the rotor (31).

14. The rotary base according to claim 13, **characterized in that**, a positioning hole is defined in the rotation portion, and a positioning post is protrusively arranged on an end face, facing towards the rotation portion, of the rotor, wherein the positioning post is inserted into the positioning hole such that the rotation portion is detachably connected to the rotor.

15. A ranging device, **characterized in that**, the ranging device comprises: the rotary base as being defined in any one of claims 1 to 14;
rotary baseand a bracket, being connected to the rotation portion, wherein a transmit port and a receive port are defined in the bracket;
a transmit assembly, being arranged at the transmit port and configured to transmit a signal;
and a receive assembly, being arranged at the receive port and configured to receive a signal.The ranging device according to claim 15, **characterized in that**, a positioning slot is defined in one end, facing towards the rotation portion, of the bracket;
wherein a positioning post on the rotor extends out of a positioning hole in the rotation portion and is inserted into the positioning slot.

16. The ranging device according to claim 15, **characterized in that**, the ranging device further comprises: a cover assembly, wherein the cover assembly is connected to the mount, and the cover assembly is configured to cover the accommodation portion, the transmit assembly, and the receive assembly;
wherein a first connection portion and a second connection portion are arranged on an end face, facing towards the mount, of the cover assembly, and a first positioning portion and a second positioning portion are arranged an end face, facing towards the cover assembly, of the mount;
wherein an outer contour of the first connection portion is matched with the first positioning portion, and the first connection portion is configured to be positioned and secured to the first positioning portion;
wherein an outer contour of the second connection portion is matched with the second positioning portion, and the second connection portion is configured to be aligned with and connected to the second positioning portion.

17. The ranging device according to claim 17, **characterized in that**, the cover assembly comprises:
a first cover, covering the bracket, the transmit assembly, and the receive assembly;
and a second cover, one end of the second cover being connected to the first cover and the other end of the second cover being connected to the mount,
wherein the second cover surrounds, encloses and covers a circumference of the accommodation portion, wherein the first connection portion and the second connection portion are both arranged in the second cover.

18. The ranging device according to claim 18, **characterized in that**, the first positioning portion and the second positioning portion are both insertion posts protrusively arranged on the mount, and the first connection portion and the second connection portion are both snap fasteners arranged on the second cover, the snap fasteners each enclosing a retractable clamping space;
wherein along a direction from the mount to the second cover, the clamping space of the first connection portion and the clamping space of the second connection portion have different depths;
or wherein the first connection portion and the second connection portion are both insertion posts protrusively arranged on the second cover, and the first positioning portion and the second positioning portion are both snap fasteners arranged on the mount, the snap fasteners each enclosing a retractable clamping space;
wherein along a direction from the second cover to the mount, the first positioning portion and the second positioning portion have different depths.

19. The ranging device according to claim 18, **characterized in that**, the first connection portion and the second connection portion are both insertion holes defined in the second cover, and the first positioning portion and the second positioning portion are both insertion posts protruded on the mount;
and the first connection portion and the second connection portion satisfy at least one of the following conditions a, b, and c:
a. along a first direction, the first connection portion and the second connection portion have different depths;
b. along a second direction, the first connection portion and the second connection portion have different lengths;
c. along a third direction, the first connection portion and the second connection portion have different widths;
wherein the first direction is a depth direction of the insertion hole, and the first direction, the second direction, and the third direction are perpendicular to each other.

20. The ranging device according to claim 18, **characterized in that**, the first cover and the second cover are integrally formed.

21. A mobile robot, **characterized in that**, the mobile robot comprises: the ranging device as defined in any one of claims 15 to 21.
